# EUROPEAN PATENT APPLICATION

(11) **EP 2 476 353 A1**
(43) Date of publication of application: **18.07.2012**
(21) Application number: 11425287.7
(22) Date of filing: 01.12.2011
(51) Int. Cl.: A47J 43/24

(54) **Colander with opening bottom**

(30) Priority: 06.12.2010 IT AN20100083 U
(71) Applicant: De Silvestri, Luciano, 63013 Grottammare (AP) (IT)
(72) Inventor: De Silvestri, Luciano, 63013 Grottammare (AP) (IT)
(74) Representative: Tiburzi, Andrea

(57) **Abstract**

The present invention concerns a colander which opens from its bottom, unloading its contents.

## Description

### OBJECT

European patent application (industrial utility model) in all the European member States of the EPC.

Following the Italian Patent application n. AN20120U000083 filed on the 06.12.2010.

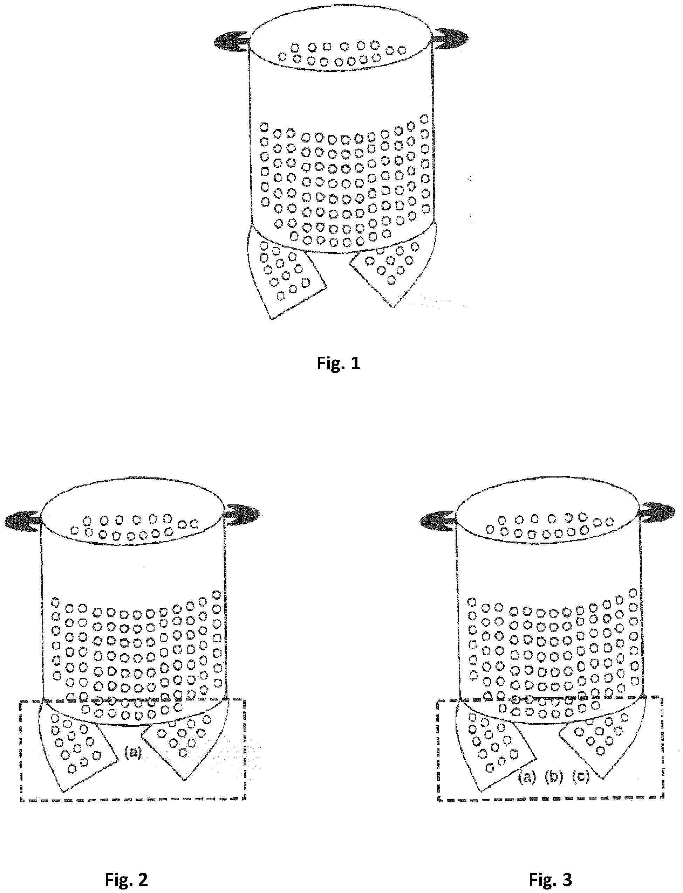

With reference to the object, we hereby refer to the photos Fig. 1 - Fig. 2 - Fig. 3 - which reprensent reliable evidence of the inventions and the object of the European Patent, which we herewith briefly describe.

### DESCRIPTION OF THE INVENTION

The fundamental element of the invention consists in the bottom of a colander which opens up and unloads its contents.

Photo Fig. 1 - The opening of the bottom of the colander is the requirement and the essential condition of the invention.

The photo Fig. 2(a) very clearly represents the invention we claim.

We substantially claim the opening of the bottom of a colander with any system the opening of the bottom is made.

Fig. 3
(a) Colander opening from the bottom and unloading its contents.
(b) Colander of any shape and size, whose bottom opens and unloads its contents, with any technical solution the opening of the bottom of the colander is made.
(c) Colander made of any material, whether steel, or other metal, or plastic material or similar.

## Claims

1. Fig. 1 - Fig. 2 - Fig. 3 -
(a) Colander opening from the bottom and unloading its contents.
(b) Colander of any shape and size, whose bottom opens and unloads its contents, with any technical solution the opening of the bottom of the colander is made.
(c) Colander made of any material, whether steel, or other metal, or plastic material or similar.
